# EUROPEAN PATENT APPLICATION

(11) **EP 1 557 545 A2**
(43) Date of publication of application: **27.07.2005**
(21) Application number: 05100379.6
(22) Date of filing: 21.01.2005
(51) Int. Cl.: F01N 3/28, B01D 53/88, B01J 35/04

(54) **Metallic catalyst for treating exhaust gases and method and apparatus for manufacturing the same**

(30) Priority: 21.01.2004 FI 20045010; 21.01.2004 FI 20045011
(71) Applicant: Ecocat OY, 41331 Vihtavuori (FI)
(72) Inventor: Tuomola, Heikki, 40520, Jyväskylä (FI)
(74) Representative: Kupiainen, Juhani Kalervo

(57) **Abstract**

The invention relates to a corrugated metal foil and a catalyst cell for treating gases. According to the invention, disposed on both sides (1a,1b) of a corrugated metal foil (1,113), at the ribs (11,11a,11b,114,115) of at least some of the corrugations (10), there is soldering paste (8,118,119) dispensed in liquid form, containing soldering material and adhesive paste, which has been dried after dispensing for removing essentially moisture and organic materials of the soldering paste.

A method and an apparatus for manufacturing the corrugated metal foil and the catalyst cell for treating gases involve or facilitate the application of soldering paste to the corrugated metal foil. In the case of the catalyst cell, a smooth metal foil (12) is wound together with the corrugated metal foil such that the soldering paste is in contact with the smooth metal foil.

## Description

### Technical background

The invention relates to a metallic catalyst for treating gases and a method for manufacturing thereof.

The properties of a metallic catalyst cell are essentially influenced by the properties of the catalyst foil that is used in the manufacture. Also the various steps of the cell manufacture have a remarkable influence on the mechanical properties of the final catalyst cell, such as on its structural resistance. This is particularly important, for example, when a catalyst cell is installed near a motor. Sudden changes in the properties of treated gases also set specific requirements on the resistance of the catalyst cell.

In the manufacture of a soldered catalyst cell, a method is generally used in which one or more metal foils that form the cell, such as metal foils of type Fe-Cr-Al, CrAl 20 5- or NiCr25FeAlY, are coated with an adhesive paste, a so-called binder. In the cell manufacture, a cell is formed of metal foils by rolling, wrapping or piling, on the outer surface of which either soldering foil or soldering paste is applied in one position and the cell is pressed inside a jacket tube. After this the cell is sprinkled, blown or dipped with specific soldering material, which attaches to the adhesive paste that is already present in the metal foil. Then the finished cells are dried, in which procedure organic components and moisture of the adhesive paste are evaporated in a separate process. On the other hand, this evaporation can also be accomplished as part of a vacuum oven treatment. In this case, the oven temperature is raised to a value, which is the evaporation temperature of the organic glue-like adhesive paste. Typically the temperature is either over or below 200°C. The cells must be kept at this temperature until the pumps of the vacuum oven have removed all evaporated adhesive paste. This treatment may take several hours depending on the oven size and the amount of the adhesive paste used.

The temperature of the vacuum oven cannot be raised to the operating temperature before all adhesive paste has been evaporated and this evaporated air has been removed from the vacuum oven. The vacuum treatment must convert the soldering material to liquid form, and generally used soldering materials, which can be used in the catalyst cell manufacture, turn liquid only at a temperature exceeding 1000°G. If the vacuum oven does not have sufficient vacuum (at least 0.01 Pa or preferably near to 0.0007 Pa), disadvantageous oxide is formed on the surface of the foil used, which damages a successful solder joint. If an oxide layer is formed, it prevents the liquid soldering material from diffusing into the foil material. In this case the soldering material remains pearl-like on the foil surface failing to absorb into the pores of the material. On the other hand, this oxidization, should it occur in a considerable amount, makes the foil material become brittle and reduces its strength.

In patent US 5 242 101 it is set forth how soldering material can be dispensed to a metallic cell by setting the cell as part of the flow pipe and by supplying glue-like adhesive paste, in which soldering particles have been mixed throughout the cell. Finally the extra soldering material is removed from the cell. In this method it is impossible to dispense soldering material to the different parts of the cell.

Patent EP 0 660 768 B1 sets forth dispensing of soldering material onto the inner surface of a mantle tube such that the adhesive paste is dispensed first, and only after that the soldering powder, which attaches to the adhesive paste. Set forth is particularly the adhesive paste used (Polyvinyl methylene) and the composition of the adhesive paste. After dispensing the soldering powder in fluidized bed, adhesive paste is dried before installing the cell in this tube.

Patent publication JP6 182 223 sets forth a manufacturing process of a cell, in which a smooth and corrugated foil is rolled. The smooth and corrugated foils are clean during the cell rolling. After the rolling process, one or both ends of the cell are immersed in adhesive paste for a predetermined length. After dipping in the adhesive paste, soldering powder is dispensed to the cell by sprinkling the cell with the powder. After sprinkling the soldering powder, a soldering foil is installed around the cell. After installing the soldering foil, the cell is inserted into a jacket tube. After installing the cell in the jacket tube, the cell is dried for removing extra amount of the organic adhesive paste. Finally the cell is soldered in a vacuum oven.

Patent publication US 2003/0077475 A1 sets forth how a glue-like binder is first dispensed to foils of less than 0.05 mm and after this the cells are rolled, wrapped or piled. Then the cell is installed in its jacket and next a specific soldering material is dispensed to the cells. This dosing of the soldering material can be carried out either by sprinkling or by dipping the cell in a soldering material bath. After this the cells are dried and extra soldering material is removed from them.

For improving the flexibility between the cell and the jacket, patent publication US 2002/0146360 A1 discloses a solution, in which a separate thin mantle, disposed in layers, is installed around the cell and is fastened to the cell via specific soldering areas. This thin extra jacket, composed of separate layers, is rolled, wrapped or piled around the cell. This extra jacket is fastened to the cell by means of local soldering stripes.

In addition, in patents SE 470581 and EP 0136515 as well as in patent publications JP 9-47668, JP 4-277032 and JP 3-161024, an attempt has been made to increase the flexibility of the cell by using various perforated, notched and grooved foil alternatives instead of a smooth foil.

### Description of invention

### A. General

Invented is now a catalyst cell for treating gases, which is extremely resistant also in demanding conditions.

To achieve this object, the invention is characterized by the features specified in the independent claims. Some of the preferable embodiments of the invention are set forth in the other claims.

A corrugated metal foil is used in this patent application to refer to any metal foil, which has metal foil points that are essentially elevated from the average level of the metal foil.

A smooth metal foil is used in this patent application to refer to any metal foil, in which the metal foil points are essentially at an equal average level in relation to each other. The surface of a smooth metal foil can be e.g. continuous, it can be perforated or it can be e.g. net-like or provided with various nail-like or bucket-type depressions.

The method according to the invention uses an approach with a completely new principle for manufacturing the cell. As described above, today a method is used in which the cell manufacture is integrated as efficiently as possible as one smooth process. The method according to the invention divides the manufacture of a catalyst cell into separate partial processes, the parts of the whole provided by which are combined into one entity, which is a soldered catalyst cell.

According to one object of the invention, a corrugated metal foil has corrugations on its both sides, and at the ribs of at least some of the corrugations on both sides there is soldering paste, dispensed in liquid form and containing soldering material and adhesive paste, which has been dried after the dosing for reducing essentially moisture and organic materials of the soldering paste. This type of metal foil can be used for manufacturing catalyst cells, which are particularly resistant even in extreme conditions, such as when installed in an immediate vicinity of a motor and/or when used otherwise at high temperatures. This type of corrugated metal foil, in which the soldering paste is ready dried and from which extra moisture has been essentially reduced, can also be very well stored and processed in many kinds of devices. Consequently, it can be used for manufacturing various types of catalysts economically and flexibly even in many different ways.

Preferably the soldering paste is dried with heating. Preferably soldering paste is dried by heating at a temperature of 110-250°C. At such a temperature, desired amount of moisture can be reduced from the soldering paste such that it can preferably endure industrial processing and storing. After drying, the moisture content can be e.g. 0.1-60%, such as below 10%.

According to one object of the invention, soldering paste is simultaneously dispensed to the different sides of a corrugated metal foil. A simultaneous dosing of the soldering paste ensures, for its part, that the soldering paste can have been accurately dispensed to the different sides of the corrugated metal foil. This contributes to improving the characteristics of the product.

According to one object of the invention, the amount of the soldering paste is essentially equal on the different sides of the corrugated metal foil. This type of metal foil can be used for manufacturing a catalyst cell, which is particularly strong in its mechanical properties, since in this case the loading forces can be evenly distributed on the different sides of the corrugated metal foil.

According to one object of the invention, soldering paste is disposed on the different sides of the corrugated metal foil in different positions relative to each other. This type of metal foil can also be used for manufacturing a catalyst cell, which is particularly strong in its mechanical properties, since in this case the loading forces can be evenly distributed in the different positions of the corrugated metal foil.

According to one object of the invention, soldering paste is disposed on the different sides of the corrugated metal foil in varying portions relative to each other. This type of metal foil can also be used for manufacturing a catalyst cell, which is particularly strong in its mechanical properties, since in this case the loading forces can be evenly distributed in the different positions of the corrugated metal foil.

According to one object of the invention, the amount of soldering paste in the area dispensed can vary for a function of distance, such that a greater soldering amount can be dispensed to the area, which is subjected to highest forces, and elsewhere, where the forces are lower, the amount of paste can be optimized.

According to one object of the invention, soldering paste is disposed at the ribs of the corrugations in portions, the thickness of which is 0.01-0.2 mm. This type of corrugated metal foil is easy to dry to a desired dry content and the amount of soldering paste is still sufficient for manufacturing catalyst cells thereof. For extremely demanding conditions, soldering paste can be preferably dispensed in portions having a thickness of 0.2-0.3 mm.

According to one object of the invention, soldering paste is disposed at the ribs of the corrugations in portions having a width and/or length of 0.1-30 mm.

According to one object of the invention, at one end of the corrugated metal foil there is a zone in which soldering paste is disposed essentially in an equal position on the different sides of the metal foil. Such a zone is needed in certain metal foils for improving its attachment to the front end, for example.

According to one object of the invention, at one end of the corrugated metal foil there is a 1-20 mm wide zone, with no soldering paste dispensed at the ribs of the corrugations thereof. This type of zone is advantageous for example when corrugated metal foil is used for manufacturing a catalyst cell, for which it is desired to achieve a particularly flexible construction.

According to one object of the invention, attached to the corrugated metal foil there is a smooth metal foil such that the soldering paste at the ribs of the corrugations of the corrugated metal foil is in contact with the smooth metal foil. This ensures that the metal foil corrugated in the soldering stage and the smooth metal foil connect to each other for forming a particularly well resisting catalyst cell.

A catalyst cell according to the invention can be manufactured in different ways. Preferably the corrugated metal foil and the smooth metal foil are connected to each other by rolling, doubling over, wrapping or piling.

According to one object of the invention, the catalyst cell is a rolled catalyst cell, and on the surface of the rolled catalyst cell there is one or more metal foil layers, which are formed by rolling uniformly from the smooth metal foil of the catalyst cell and contact at least partly the same smooth metal foil, having soldering paste inside for attaching the metal foil layer to itself and/or to the corrugated metal foil. Industrial manufacture of such a catalyst cell according to the invention is economical and, in addition, it can be made particularly resistant even in demanding conditions.

According to one object of the invention, the smooth metal foil of the catalyst cell comprises longitudinal flexible elements. Preferably these flexible elements are only in the outermost layer. The use of flexible elements, for its part, essentially influences the characteristics of the catalyst cell. In extreme conditions this has a particular importance, since in this case the catalyst cell can be made more resistant due to its flexibility compared to what it would be without the flexible elements of the outermost layer. According to one object of the invention, the outer part of the smooth metal foil comprises flexible elements, which are formed by buckling the smooth metal foil with a calibrating tool by pressing the catalyst cell. Preferably these flexible elements are made by pressing the catalyst cell towards the center shaft and/or center shafts of the catalyst cell.

According to one object of the invention, the catalyst cell is connected to a jacket, the inner diameter of which is 0.1-5 mm larger than the outer diameter of the catalyst cell, In such a solution there is a clearance between the cell and the jacket, which allows easy installation of the cell to the jacket preferably without any separate tools. In addition, there is provided a movement allowance for thermal expansion between the cell and the jacket, which reduces loads subjected to the cell.

According to one object of the invention, the catalyst cell is attached to the jacket for the area of one or more wide joint surfaces, which are pressed on the outer surface of the jacket, and soldering material is dispensed on the outer surface of the catalyst cell, in the connecting area. According to one object of the invention, the catalyst cell is attached to the jacket by means of two and/or more, 2-20 mm long and/or wide soldering portions, applied to the outer surface of the catalyst cell. The cell and the jacket can be economically and reliably connected also in this method.

According to one object of the invention, the catalyst cell is attached to the jacket by means of connecting grooves pressed on the outer surface of the jacket. With the connecting grooves, the cell and the jacket attach well to each other and at the same time the construction provides it with flexibility, which is advantageous in demanding conditions of use. This, for its part, increases the service life of the catalyst cell.

According to one object of the invention, the corrugated metal foil and the smooth metal foil are attached together partly by means of spot welding. Welding ensures that both foils are uniformly attached to each other.

According to one object of the invention, a catalyst cell installed in the jacket and the jacket are pressed together using calibrating tools for removing the clearance at least from part of the area between the cell and the jacket and for achieving a contact between the cell and the jacket. In this calibration, the outer surface of the cell and the inner surface of the jacket come into contact at least in the solder joint area and capillary forces required by the solder joint are generated. Now this calibration provides that the outer diameter of the jacket and thereby the outer diameter of the cell are always preferably correct according to the tolerances.

According to one object of the invention, the catalyst cell has been heated for soldering the metal foils to each other and/or to the jacket with the soldering material. This step is needed for being able to solder the components of the catalyst cell to each other. Heating can be made in a protective atmosphere. Heating and cooling are preferably associated with soft annealing of the hard foil and/or with forming of an oxide layer on the foil surface.

### B. Manufacture of metal foils

In the method according to the invention, the manufacture of a catalyst cell is started by a foil reception, in which the future foil is divided into two batches, of which the final task of the second foil batch is to be the smooth foil of the catalyst cell. The second batch will be molded as the corrugated metal foil of the catalyst cell, which is ready coated with the soldering paste, and all organic compounds and moisture have been removed from this soldering paste prior to combining into a cell.

The steel supplier delivers the foil, for example, cut to a width of 10-250 mm as well as rolled to a desired thickness, generally 0.02-0.12 mm. In addition, the foil material can be delivered in two different delivery states: hard or soft annealed. A hard delivery state means that the breaking stretch of the material is generally below 10% and the breaking strength is extremely high, exceeding even 1000 MPa. Likewise, in the soft annealed state, breaking stretch is over 25% for some of the applied materials, while the breaking strength is approximately 200 MPa. The delivery state to be selected is determined conforming to the properties required in the manufacture of each product. The delivery states of the foil material have a great difference also as regards the cleanliness classification. Generally a foil in a hard delivery state is not finished to any particular cleanliness class, but the foil requires careful cleaning or separate degreasing before its final introduction into the manufacture of the catalyst cell. A soft annealed foil is always in the cleanliness class defined by the supplier (amount of organic materials e.g. below 20 mg/m²) due to the methods used in soft annealing. As soft annealing is performed at very high temperatures, no impurities, which could form harmful oxide on the foil surface, are allowed on the surface of the foil material. In addition, soft annealing is always carried out in a protective atmosphere, which eliminates the formation of an oxide layer.

The preparation of a smooth foil in the catalyst cell manufacture is started by the foil finishing. If the foil is in the hard delivery state, the foil is cleaned in a specific cleaning process, in which all organic waste products are removed from the foil and finally the foil is dried or grease and other organic material compounds are burnt or otherwise removed from the foil surface. If the foil is soft annealed and the cleanliness level of the foil is guaranteed by the supplier, and access of organic or other particles, moisture or other impurities onto the foil surface has been prevented during the transport, the foil can be placed directly on the coil in stock to wait for the final catalyst cell manufacture.

If it is suspected that impurities have accumulated on the foil surface, the foil is cleaned in a separate cleaning process, in which the foil is first treated with a cleaning solution and then rinsed and finally dried such that all moisture is removed from the foil before rolling it onto the coil in stock, or grease and other organic material compounds are burnt or evaporated or otherwise removed from the foil surface.

In the manufacture of a corrugated metal foil, the procedure differs from the treatment of a smooth foil presented above before the final manufacture of a catalyst cell. A foil on the coil in stock, which is either in the hard or soft delivery state, is led for example to a separate corrugating device, in which it is possible to form a desired corrugation pattern in the foil. The corrugation pattern can be either sinusoidal, triangular, square or some other form, which can be produced in a continuous process. On the other hand, the corrugation geometry does not need to be straight, but the corrugation can be at an inclined angle in relation to the flow direction of the cell, or the corrugation can sheer from the flow direction or the corrugation can have separate grooves at right angles or at some other angle relative to the flow direction. Possible are also other solutions, in which the foil may be perforated, or it may have different types of nails, which have been cut and corrugated or pressed from the foil itself.

In the corrugation process the foil goes through a corrugating unit, in which corrugation as described above is created in the smooth foil.

As the foil is modified in a continuous process during corrugation, and the foil slides in this process in relation to the corrugating tool, lubrication is preferably used in the corrugation process for minimizing friction. Lubrication can be carried out traditionally using lubricating oil, either non-volatile or easily vaporizable. When using oil as lubricant, cleaning of the corrugated foil becomes difficult before rolling the foil onto the coil in stock. On the other hand, special oils have been developed, which can be removed by a mere water wash without using any additives. By using vaporizable/volatile oils it is possible to evaporate from the foil surface any oil and other organic compounds remaining on the foil surface after corrugation. An environmentally friendly method is to use such soap or other biodegradable lubrication products, the removal of which from the corrugated metal foil is relatively easy and no separate cleaning chemicals are needed in the removal. Biodegradable lubrication products, which are generally a soap solution, function at the same time as an additional cleaning agent for the metal foil. On the other hand, the system is closed if a multi-stage process is used, in which the strongest soap solution is applied in the first step and the concentration reduces in the following steps being practically zero in the last step. The strong soap solution of the first step is led to the corrugating unit for lubricating the corrugated metal foil. With the corrugated foil the soap solution is conveyed back to the cleaning bath of the first step. The loss of soap solution occurring during corrugation is substituted by leading replacement always from a later cleaning step to an earlier cleaning step, and clean fresh water is added to the last rinsing step only. Cleaning waters are kept at a temperature of over 40°C, but the maximum temperature is however restricted to 75°C. After the last rinsing step, extra water is blown off from the corrugated metal foil before drying the foil. The dried corrugated metal foil is led directly to the coil in stock to wait for the coating of the corrugated metal foil with soldering paste. If necessary, this corrugation and cleaning as well as rolling onto the coil in stock can be carried out by subcontracting in a different location than the actual coil manufacture.

Another possible cleaning method after corrugating is such in which the corrugated metal foil does not go directly through the cleaning baths after corrugation, but the foil is directly coiled around the coil in stock, which can be either vertical or horizontal. After the entire coil in stock of folio has been corrugated, generally approximately 1000-2500 meters, this coil is transferred to the cleaning place. In this method the coil in stock is immersed completely in the cleaning baths, immersing the coil in stock always in cleaner water than the previous, and finally it is dried in a specific drying oven.

After corrugation and cleaning or other lubricant removal the coil in stock is moved to wait for the actual metal foil coating with soldering paste. In the soldering paste coating, either an equal amount or a different amount is dispensed per side to both sides of the corrugated metal foil in a specific coating process. Typically an equal amount of soldering paste is dispensed to both sides of the corrugated metal foil. Another method is to dispense a different amount of soldering paste to the different sides of the corrugated metal foil. As a third method, a variable amount of soldering paste can be dispensed in the longitudinal direction to the different sides of the corrugated metal foil, however, to equal positions in soldering portions.

Dosing of the soldering paste is preferably carried out in a specific soldering paste dosing machine, which is based on the CubroBraze method.

In the soldering paste dosing, the corrugated metal foil is in the initial state on the coil in stock, which is placed in the feeding machinery set in connection with the coating apparatus. From this, the travel of the corrugated and cleaned foil, set in the feeding head machinery, continues towards the first soldering paste coating unit, in which a predetermined amount of soldering paste is dispensed at the ribs of the bottom surface corrugations of the corrugated metal foil, to predetermined areas. Soldering paste is dispensed to the coating roll surface according to the following process.

Preferably the outer diameter of the coating roll is not constant, but the roll outer diameter can be constant and constant only in those areas, which come in contact with the ribs of the bottom surface of the corrugated metal foil. In the areas for which it is not desired that they come in contact with the ribs on the bottom surface of the corrugated metal foil, the diameter of the coating roll is notably smaller than in the areas, which come in contact with the ribs of the corrugated metal foil.

Preferably the outer diameter of the coating roll can be constant, whereat the paste to be dispensed forms stripes, which now form an area, which has a larger diameter, over the roll length.

According to one object of the invention for manufacturing a metallic catalyst cell, for batching in two or more stages, the apparatus is provided with two or more soldering paste coating rolls, two or more dispensing devices for dispensing a liquid soldering paste onto the soldering paste coating rolls, two or more soldering paste separating units for adjusting the paste layer of the soldering paste on the coating roll, a control unit for the corrugated foil for determining the position of the corrugated foil relative to the coating rolls, and two or more soldering paste removal units for removing the soldering paste from the paste rolls. Preferably the distance between the corrugated foil and the coating roll is adjustable. The distance can be adjusted with the position adjustment of both or one of the coating rolls and/or with the position adjustment of the control unit. Using this type of equipment it is possible to manufacture a metallic catalyst cell according to the invention extremely precisely even with a high capacity.

### C. Manufacture of catalyst cell

In the manufacture of the actual catalyst cell both the smooth metal foil and the corrugated and partly or completely dried corrugated metal foil precoated with soldering material are either rolled, wrapped or piled as a catalyst cell. The cell construction is now discussed in more detail, in which the actual cell is formed by rolling up the foils into a spiral roll and which cell is later installed inside an outer jacket and finally all components are attached together by soldering. The method, which is set forth in this report, can be adapted directly and with minor changes to the manufacture of all the above-presented cell types.

The cell manufacture is started by transferring the full coils in stock of smooth and precoated corrugated metal foil to the feeding unit of the cell manufacturing device. In the cell manufacture the smooth uncoated foil is pulled over the center shafts/center shaft of the rolling unit for approximately 5-20 mm. The precoated corrugated metal foil is pulled only until it is flush with the rolling shafts/shaft. Before starting the rolling the smooth and corrugated metal foil are attached together preferably by spot welding. This attachment of the foil ends can be carried out before the foils are conveyed to the center shafts of the rolling head. Welding ensures that both foils curl evenly around the center shaft/shafts at the starting point of rolling. Rolling is continued until the target value of the cell outer diameter is reached. When the outer diameter is by 0-10 mm smaller than the target outer diameter, dispensing of the soldering paste on the bottom surface of the smooth foil is started in the cell rolling. Moisture and organic compounds are not removed now from the soldering paste, but it is dried in the vacuum oven or in a separate drying oven. Soldering paste is dispensed to the bottom surface of the smooth foil such that the outermost corrugated metal foil layer of the cell comes in contact and becomes attached to the smooth foil for the top surface of the corrugated metal foil and for the bottom surface of the smooth foil over the entire cell length preferably excluding the above presented 1-50 mm distance from the rear part of the cell. As the smooth foil is not cut in any of the rolling stages, it is preferably a seamless part of the whole cell. Consequently, as the cell outer diameter tends to expand due to thermal stress, the cell expands like a spiral, because there is no break between the outermost foil layers and the foil layers of the cell.

Once all desired corrugated metal foil has been rolled up in the cell, and the corrugated metal foil was cut when the desired cell outer diameter was reached and dispensing the soldering paste to the bottom surface of the smooth foil was started, the cell rolling is continued only with the smooth foil. Thus soldering paste has been dispensed on the bottom surface of the smooth foil, and when rolling 1-10 extra layers of this foil around the cell, a thin additional mantle, integral to the cell construction, forms around the cell. After a desired amount of smooth foil has been rolled around the cell, this foil is cut and finally it is attached at its end to the foils beneath with spot welds. Now the precoated corrugated metal foil and the uncoated smooth foil, which has been coated on its bottom surface for a part of the distance in the rolling stage but not dried, form a catalyst cell, which can be either finished in the same location where it was manufactured or it can be delivered elsewhere for the finishing. Finishing is not used here to refer to dispensing of support material or noble metals influencing the performance of the catalyst, but to the cell manufacture before such processes.

In the rolling process, the cell outer diameter is preferably made larger by at least 0.1-5 mm than the final cell outer diameter will be when the cell is completely ready for installation in its application.

### D. Flexible elements

After the rolling process, the cell has a single- or multi-layered smooth foil layer around it, which becomes too rigid, if the cell would be now as such directly heated in the vacuum oven, and the soldering material, when melting and cooling again, would form joints between each contact surface appearing in the cell. Since the cell outer jacket would become too rigid, flexible elements can be preferably made in it before the cell is installed in its jacket. These flexible elements can be produced by treating the cell before its installation in the jacket and additionally by treating again the cell and the jacket together before the vacuum oven treatment.

In the treatment of the rolled cell, before installing the cell in the jacket, longitudinal flexible elements are formed on the outer surface of the cell, which allow thermal expansion of the cell without plastic deformations, even if the mantle outside the cell would not expand in the same ratio as the cell. As the cell tends to cool down and the mantle does not cool down, whereat the cell tends to become smaller and the mantle does not become smaller, these flexible elements preferably allow the cell reduction without plastic deformations.

To form these flexible elements, the outer diameter of the cell must be reduced by calibration, in which the cell outer surface is pressed with pressing tools moving in the cell radial direction, which provide a reduction of the cell outer diameter. In this calibration stage it is possible to calibrate also other forms than round cells. If oval or racetrack shaped cells are manufactured such that the cell is rolled around a thick center shaft and finally the cell is flattened to an oval or racetrack shape, additional tools are required in the cell calibration with which flexible elements can be formed around the cell.

During calibration the calibration tools tend to move towards the cell center shaft in the radial direction, whereat a compression load, which tends to shorten the length of the smooth foil, generates in the smooth foil of the cell. This shortening of the length of the smooth foil (swaging) is not however possible, because the buckling strength of the smooth foil is so low that swaging is not possible. However, as the structure is a continuous spiral, the cell tends to curl tightening at the same time. As the consequence of this cell tightening, each corrugation rib of the corrugated metal foil comes in contact with the corresponding smooth foil layer. Once all the possible contacts are verified and the outer calibration jaws still reduce the cell size by pressing, the cell can no more tighten but instead the smooth foil tends to swage. As this is a thin construction that can support an almost nonexistent buckling load, the outermost smooth foil layers will buckle due to the effect of external load. Buckling is possible only at the connection point of the calibration tools, such that bucklings are typically obtained at a distance of approximately 30 degrees. This angle between the bucklings depends on how many calibration jaws are used for carrying out the reduction of the cell outer diameter. Since each calibration jaw is close to another, and the jaw surfaces in contact with the cell are at a distance of less than 0.5 mm from each other in the final stage of calibration, buckling cannot occur otherwise than towards the cell center shaft of shafts. Consequently, on the cell outer surface, on the outermost smooth/straight foil layers, plastic articulations are formed, through which different thermal expansion of the cell compared to the jacket is possible at a later stage without high loads directed to the cell, which could produce plastic deformations in the cell and thereby cell damaging.

When manufacturing oval or racetrack shaped cells, the cell is rolled around a large shaft of a predetermined size, such that after the rolling the cell has a circular construction. To bring the cell to an oval or racetrack shape, the cell must be pressed finally, before installing it in the jacket, to an oval or racetrack shape, such that the center hole of the cell disappears and the cell receives an oval or racetrack shape. However, before this pressing into the final shape, flexible elements are preferably formed in the cell by calibrating the circular cell. In the calibration, a rigid center shaft, either slightly smaller than the hole or within a tolerance, which does not receive deformations in calibration, is installed in the center hole. The cell, in which this calibration shaft is installed, is placed in the calibration device, in which the cell outer diameter is reduced, as previously in the case of the round cell. Consequently, on the cell outer surface, in the outermost smooth foil layers, plastic articulations are generated due to buckling, which buckle towards the cell center shaft and form longitudinal flexible elements. Finally the precalibrated cell can be pressed into its oval or racetrack shape.

By additionally rolling smooth foil, which is coated with soldering material on the bottom surface, around the cell after cutting the corrugated metal foil, and by calibrating the cell before installing it in its jacket, flexible elements can be formed on the cell outer surface, which are a seamless part of the cell itself, and it is not necessary to install around the cell separate layers of smooth, straight or other foil layers including flexible solutions.

### E. Soldering material between the cell and jacket

Finally the cell should be installed in a jacket, with which the cell can be attached to the rest of the construction either by soldering, welding, riveting or other suitable connection method. In dispensing of the soldering material, the soldering material can be installed either around the cell or alternatively on the inner surface of the jacket tube in predetermined positions. As soldering material it is possible to use either ready soldering paste or it can be carried out by dispensing first the adhesive paste and sprinkling this with the actual soldering material, or a soldering foil can be used.

When attaching the cell to the jacket, the connection must always be carried out such that the attachment between the cell and the jacket is made with two or more separate connection points. The required joint surface area must be preferably dimensioned according to external loads such that the highest shearing stress allowed in each case is not exceeded in the connection point. This dimensioning is based on the traditional methods of mechanics and strength of materials and it is not separately described here due to its universality and simplicity.

The implementation of the connection between the cell and the jacket by means of two or more connection points is based on the principle of reduction of internal shearing forces. As the thermal expansion coefficient of the foils and outer jacket materials used in the catalyst cell manufacture is always different and the cell heating and cooling take place unhomogenously, temperature gradients are generated on the long joint surfaces creating extra shearing stresses in this joint surface area. The only real possibility to eliminate these shearing stresses is to form smaller connection areas, the sum of which, however, provides the same total joint surface as the one that must be achieved with the theory presented earlier. Consequently, the maximum thermal gradient within one smaller connection area can be minimized and the shearing stress in this connection can be minimized at the same time.

The soldering material can be installed alternatively either on the cell outer surface or the jacket inner surface.

### F. Installing the cell in the jacket

When installing the cell in the jacket, the starting point is that it must be possible to install the cell without separate tools avoiding thus damaging the soldering stripes during installation and no extra force is required in the installation.

The basis for this kind of installation without separate installation tools is that the cell outer diameter is preferably 0.1-5 mm smaller than the inner diameter of the jacket. Consequently, there is always a small clearance between the cell and the jacket, which allows carrying out the installation in the jacket without separate installation tools. The cell is installed in the jacket in a predetermined position in relation to the front and rear surfaces of the jacket. After this, the cell with the jacket is placed in a calibration device, in which the outer diameter of the jacket is pressed into a predetermined diameter relative to the tolerances. In this calibration, the outer surface of the cell and the inner surface of the jacket come into contact and capillary forces required by the solder joint are generated. Now this calibration provides that the outer diameter of the jacket and thereby the outer diameter of the cell are always preferably correct according to the tolerances.

With this double calibration, flexible elements were provided on the cell outer surface, and in the second stage, a sufficient surface pressure is achieved between the cell and the jacket, which allows forming the joint provided by the soldering process. As the cell outer surface is now provided with flexible elements, plastic deformations are not created in the soldering event and the number of cells damaging in the soldering event can be minimized at the same time. As the cell is firmly attached to the jacket due to the calibration with the jacket, the actual vacuum oven soldering can be carried out also elsewhere than the cell manufacture, because the cell resists well external loads, even though it has not yet been soldered to the jacket.

### G. Soldering in vacuum oven

The actual cell soldering takes place in a vacuum oven or in a protective gas oven at a high temperature. Oven treatment is carried out in several steps, in which first step the oven temperature is raised to approximately 200-400°C and the oven is kept at this temperature for a predetermined time. During the operation, the air contained in the vacuum oven is pumped out of the oven immediately after closing the oven already before starting to raise the temperature. When the oven reaches the above-mentioned first target temperature, moisture and organic materials still contained in the cells evaporate and impair the vacuum. By monitoring the generation of vacuum it can be ensured that all moisture and organic compounds evaporate and the temperature can be increased to the subsequent level. On the other hand, dry protective gas can be introduced in the oven in this step simultaneously decreasing the vacuum to zero, that is, the oven is now completely filled with protective gas. As protective gas is introduced to the oven, the oven temperature decreases. After introduction of protective gas, the oven temperature is increased back to the above-mentioned level, or the temperature can be preferably increased to a slightly higher value, however not above 450°C. Once the temperature has increased back to the target value, the vacuum aspiration of the oven is restarted. After reaching a sufficiently good vacuum, 0.01-0.0007 Pa, the oven temperature can be increased near to the soldering temperature.

In filling the oven with protective gas as described above, it was possible to remove from the oven any remaining impurities and ensure the cleanliness of the product to be soldered before increasing the temperature to the soldering temperature. Before increasing the oven temperature to the actual soldering temperature, the temperature is raised near to the soldering temperature, typically to 1000-1100°C. The oven is kept at this temperature until all material in the oven has reached this temperature. The vacuum in the oven is preferably within the limits of 0.01-0.0007 Pa during the entire process, whereby the generation of a harmful oxide layer is avoided on the foil surface. Finally the oven temperature is raised to the actual soldering temperature, which is 1100-1300°C depending on the melting temperature of the soldering material. The oven temperature is kept at the soldering temperature for 5-45 min. depending on the case. After this the temperature is slowly decreased and at a temperature of approximately 500°C or earlier or at a lower temperature, protective gas is introduced to the oven and the oven temperature is decreased back to the room temperature. The use of protective gas is individual and it can either be used or it is not used. On the other hand, if the catalyst cell foil has been hard in the delivery state, the foil can be preferably soft annealed in this same process. In the cooling stage of the oven, an oxide layer, which is required for ensuring the keeping of the support material, can be formed on the foil surface in the cooling stage by an optimal use of the protective gas. Since the support material is based on aluminium oxide, and one component in the foil qualities used is aluminium, an aluminium oxide layer, to which the support material attaches due to chemical similarity, can be produced on the foil surface.

After removing from the oven the catalyst cells are ready for a further treatment either in the same location in which they have been manufactured, or altematively they can be delivered elsewhere for a further treatment. In the further treatment, support material and noble metals are dispensed to them, and they are connected as part of the total system into which they were designed to be installed.

### H. Mechanical resistance of a soldered cell provided with flexible elements

Growing of the soldering stripe cannot take place in the coating of the corrugated metal foil of the cells according to the invention, because the roll is preferably so formed that the roll diameter varies and in such positions in which soldering paste is not desired in the foil, the roll diameter is so much smaller that the roll can never come in contact with the foil. In rolling, on the other hand, when soldering paste is dispensed to the bottom surface of a smooth foil, the roll is also during dispensing only locally in contact with the foil and thus forms soldering stripes on the bottom surface of the foil. When the smooth foil comes in contact with the lower foil layer, contact forces compress this incompressible solution, which, due to the above described characteristic, spreads to a wider area than to which it is dispensed. Consequently, the width of the final soldering stripe is greater than that of the dispensed stripe. Finally the contact forces are received by the extremely small soldering material particles, which are present only in the soldering adhesive paste and are mainly of a nickel based material, which is not incompressible.

When studying the behavior and resistance of various constructions in highly loaded applications, such as a precatalyst of gasoline motors, the service life and failure mechanisms of products manufactured with various methods should be compared. One test method for an accelerated service life is to stress the catalyst in a motor bench, in which the catalyst is installed either directly in the exhaust header of the motor or very near to the exhaust header, however not at a distance exceeding 300 mm from the exhaust header. To pass the test, the catalyst must be undamaged on its front surface, which means that ruptures are not allowed on the front surface of the catalyst or pieces must not have detached from it, which could be conveyed to the motor when switching from full load running to idle running or partial load running.

In the test arrangement the speed of rotation of the motor is raised from idle running to 5500 revolutions per minute as fast as possible. Typically this rotation speed increase takes place in a few seconds, however in less than 10 seconds. Consequently, the exhaust gas temperature increases from the temperature of the idle running speed of rotation of 350°C to 950°C in less than 10-15 seconds. At the center of the cell the temperature is higher by approximately 50-100°C. The motor is run at full power at a speed of 5500 rpm for 50 seconds. After this the motor revolutions are decreased to the idle running speed of 800 rpm and the exhaust gas temperature drops to 350°C in approximately 40 seconds. Then also the cell temperature decreases to approximately 500°C. The motor is run at the idle running speed for 50 seconds, after which the revolutions are raised back to 5500 rpm. This is repeated until damage is detected in the cell or until to 100 h. The cell condition is checked for the first time after each 5 h of running and thereafter always at intervals of 20 h such that the second check is made after the 20 h test and the following after 40 h and so on.

In constructions, in which a mantle composed of separate layers is wrapped around the cell and these layers are attached together only locally (WO 01/31175 A1), the service life has not met the above-presented requirement. Typically, the service life in this type of construction is 5-15 h. The failure mechanism of a construction type is based on the relation between the shearing forces generating in the test situation and the capacity of the outer casing to bear shearing loads, whereat shearing stresses exceeding the yield point and breaking point are generated in local connection points, causing fractures in the constructions and thereby a final damage. A typical failure mechanism for this type of construction, in which a separate mantle composed of several layers is installed around the cell, the layers of which are attached together only at the front and rear part of the cell or alternatively with one cross directional locking groove, is cell sliding in the flow direction and turning of the outermost foil layers on top of the cell front surface.

In constructions, as in patent US 5,648,176 and in all similar soldered constructions, in which there are no separate flexible elements integrally attached to the cell on the cell outer surface, as in the cells according to the invention, ruptures are very quickly generated on the cell front surface and thereby small pieces detach from the cell as a result of a long-term use, which pieces can be conveyed to the motor and contribute to a motor failure.

In constructions, in which soldered metal cells manufactured in a method described earlier in this report, in which straight foil coated with a soldering paste on the bottom surface over the entire cell distance, is rolled on the cell outer surface, which foil is not however coated with the soldering paste on the bottom surface for a distance of 1-20 mm on the cell rear surface, and before installing the cell in the shells, longitudinal flexible elements are formed in the cell, which allow thermal expansion of the cell even though the jacket would not expand proportionally with the cell, these above described failures could not be made to generate during a 100 h service life test. On the other hand, this achievement of a 100 h service life requires the cell to be attached, depending on the dimensions of each cell, with at least two soldering stripes, the width of which is determined case by case. Between the soldering stripes between the cell and the jacket, it is always required to have a sufficient unsoldered interval, which creates longitudinal elasticity for the cell, and in case the use of theoretically wide stripes is needed, an individual wide stripe must be divided into several thin stripes, the total area of which is equal to that of one wide stripe. Consequently, by using several thin soldering stripes that are separate from each other, it is possible to minimize the temperature gradient in the soldering stripe area and shearing stress is simultaneously minimized in the soldering stripe area, which increases the cell resistance against loads.

### Detailed description of invention

Some of the embodiments of the invention are described below in detail by making reference to the enclosed drawings.
Figure 1 illustrates a corrugated metal foil having soldering paste on both sides.
Figure 2 illustrates a corrugated metal foil having soldering paste on both sides in different positions.
Figure 3 illustrates a corrugated metal foil having soldering paste on both sides in portions of different sizes.
Figure 4 illustrates corrugated and smooth metal foils attached together.
Figure 5 is a cross sectional view of smooth metal foils and a corrugated metal foil having soldering paste on both sides, attached together.
Figure 6 is a cross sectional view of smooth metal foils and a corrugated metal foil having soldering paste on both sides in different positions, attached together.
Figure 7 is a cross sectional view of smooth metal foils and a corrugated metal foil having soldering paste on both sides in portions of different sizes, attached together.
Figure 8 illustrates a metal catalyst cell, which has connecting grooves and flexible elements on its surface.
Figure 9 shows a catalyst cell according to Figure 8 attached to a jacket on the surface of which connecting grooves have been made.
Figure 10 illustrates a calibrated catalyst cell, which is installed in a jacket.
Figure 11 shows the catalyst cell and the jacket according to Figure 10 with clearance removed between them.
Figure 12 illustrates a calibrated catalyst cell provided with flexible elements, which is installed in a jacket.
Figure 13 shows the catalyst cell and the jacket according to Figure 12 with clearance removed between them.
Figure 14 illustrates a catalyst cell and a jacket having soldering paste on their surfaces.
Figure 15 illustrates a calibrated catalyst cell provided with flexible elements, which is installed in a jacket.
Figure 16 is a detail of Figure 15.
Figure 17 illustrates an apparatus for dispensing soldering paste to a corrugated metal foil.
Figure 18a illustrates another apparatus for dispensing soldering paste to a corrugated metal foil.
Figure 18b shows a detail of soldering paste dispensing of the device of Figure 18a.

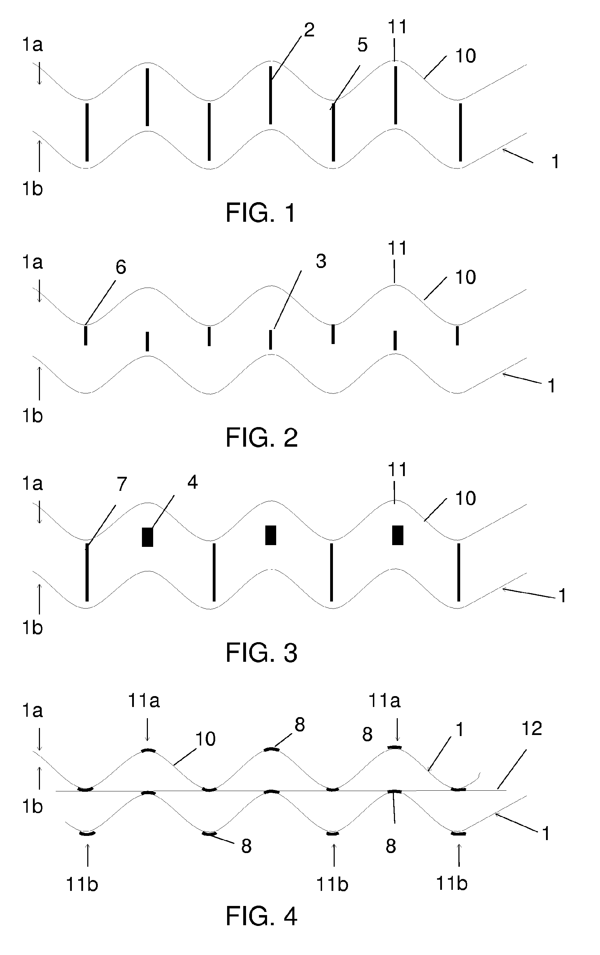

Figures 1-3 show a corrugated metal foil having soldering paste on both surfaces 1a, 1 b at the ribs 11 of the corrugations 10. In Figure 1 the amount of soldering paste is equal, in Figure 2 it is disposed in different positions and in Figure 3 it is disposed in portions of different sizes on the different sides 1a, 1b of the corrugated metal foil 1.

Figure 4 is a side sectional elevation of a smooth metal foil 12 and corrugated metal foils 1 attached together and having soldering paste 8 at the ribs 11a, 11 b of the corrugations 10 of both of their sides 1 a, 1b. The soldering paste 8 of the corrugated metal foils 1 is in contact with the smooth metal foil 12.

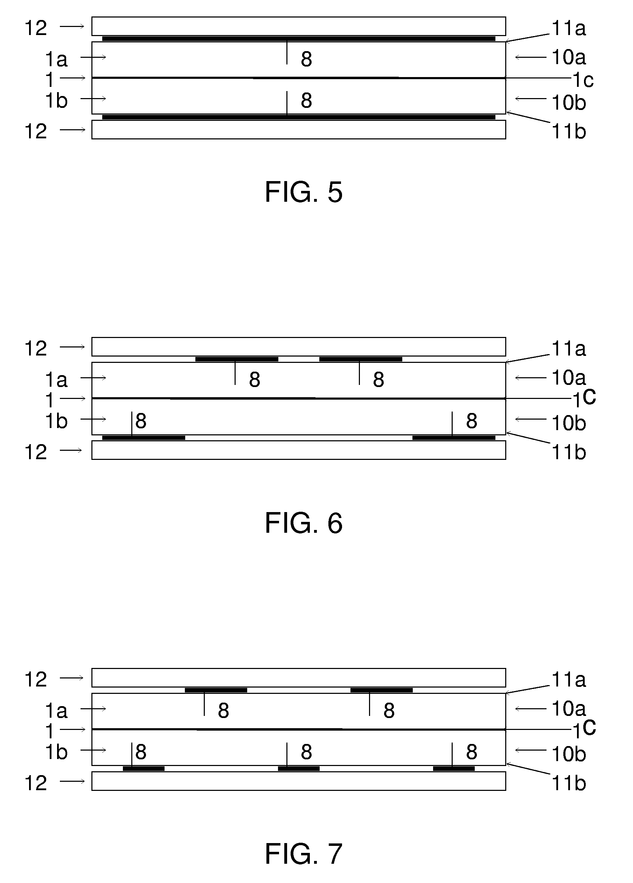

Figures 5-7 show a cross sectional view of smooth metal foils 12 attached together and the corrugated metal foil 1 having soldering paste 8 at the ribs 11 a, 11 b of its corrugations 10a, 10b on both sides 1a, 1 b of the corrugated metal foil. In Figure 5 the amount of soldering paste is equal, in Figure 6 it is disposed in different positions and in Figure 7 it is disposed in portions of different sizes on the different sides 1 a, 1 b of the corrugated metal foil 1.

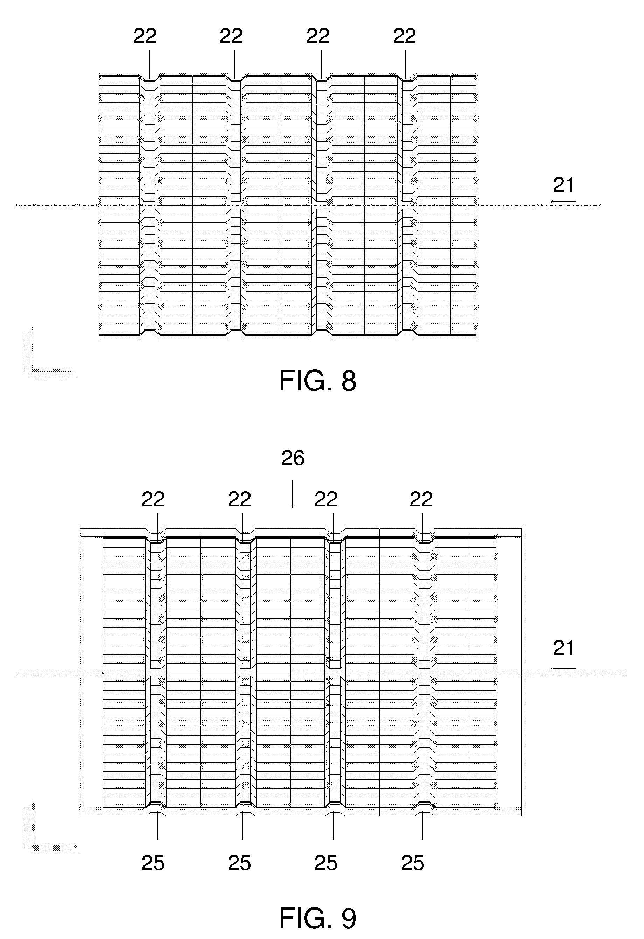

Figure 8 shows a catalyst cell 21, with connection grooves 22 and flexible elements 23 pressed on its outer surface for improving the resistance of the catalyst cell 21.

In Figure 9 the catalyst cell 21 according to Figure 8 is installed in a jacket 24 for forming a catalyst 26. Pressed in the jacket 24 there are connecting grooves 25 of the jacket for improving the resistance of the catalyst cell 21. Before pressing the connecting grooves 25 of the jacket, connecting grooves 22 of the cell have been pressed in the cell preferably during the calibration of the cell. This has also the advantage that the cell 21 resists well mechanical treatment for example in transportation and the assembly of the catalyst 26.

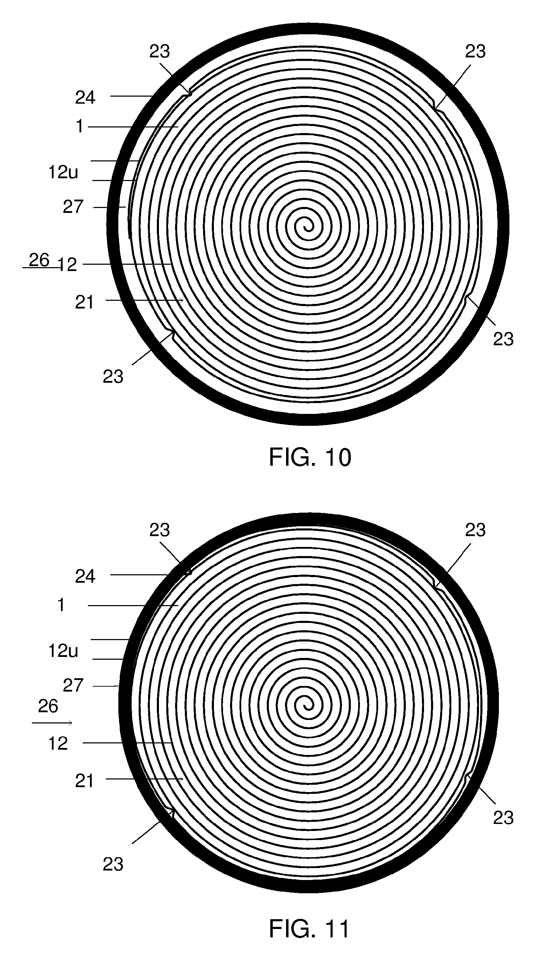

Figure 10 shows a calibrated catalyst cell 21, which is installed in a jacket 24 for forming a catalyst 26. The catalyst cell 21 is rolled from the smooth metal foil 12 and corrugated metal foil 1. On the outer surface of the rolled catalyst cell 21 there is one metal foil layer 12u, formed by rolling uniformly from the smooth metal foil 12 of the catalyst cell 21, contacting at least partly the same smooth metal foil 12, which has soldering paste 8 inside (not shown) for attaching the metal foil layer 12u to the smooth metal foil 12, 12u and/or to the corrugated metal foil 1. Before inserting to the jacket 24, the smooth metal foil 12, 12 u and the corrugated metal foil 1 of the catalyst cell 21 are attached together by spot welding (not shown). Flexible elements 23 have been formed on the smooth metal foil layer 12u of the outer surface for improving the resistance of the catalyst cell 21. The catalyst cell 21 is calibrated in such a manner that a clearance 27 has remained between it 21 and the jacket 24, due to which attaching them 21, 24 can have been preferably made without installation tools.

Figure 11 shows a catalyst cell 21 and a jacket 24 according to Figure 10, which have been pressed together with calibration tools for removing at least partially the clearance 27 between the cell 21 and the jacket 24 and for achieving contact between the cell 21 and the jacket 24.

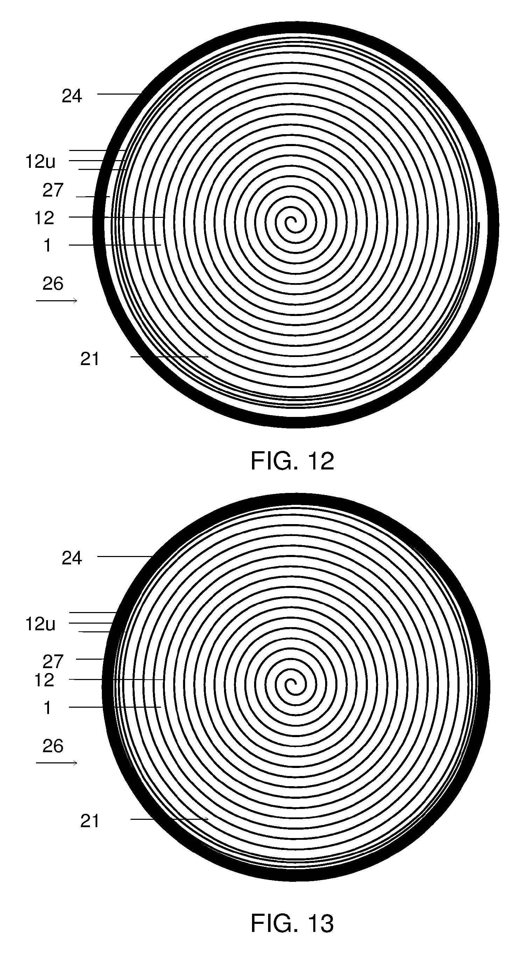

Figure 12 shows a calibrated catalyst cell 21, which is installed in a jacket 24 for forming a catalyst 26. The catalyst cell 21 is rolled from the smooth metal foil 12 and corrugated metal foil 1. On the outer surface of the rolled catalyst cell 21 there is one metal foil layer 12u, formed by rolling uniformly from the smooth metal foil 12 of the catalyst cell 21, contacting at least partly the same smooth metal foil 12, which has soldering paste 8 inside (not shown) for attaching the metal foil layer 12u to the smooth metal foil 12, 12u and/or to the corrugated metal foil 1. Before inserting to the jacket 24, the smooth metal foil 12, 12 u and the corrugated metal foil 1 of the catalyst cell 21 are attached together by spot welding (not shown). The catalyst cell 21 is calibrated in such a manner that a clearance 27 has remained between it 21 and the jacket 24, due to which attaching them 21, 24 can have been preferably done without installation tools.

Figure 13 shows a catalyst cell 21 and a jacket 24 according to Figure 12, which have been pressed together with calibration tools for removing essentially the clearance 27 between the cell 21 and the jacket 24 and for achieving contact between the cell 21 and the jacket 24.

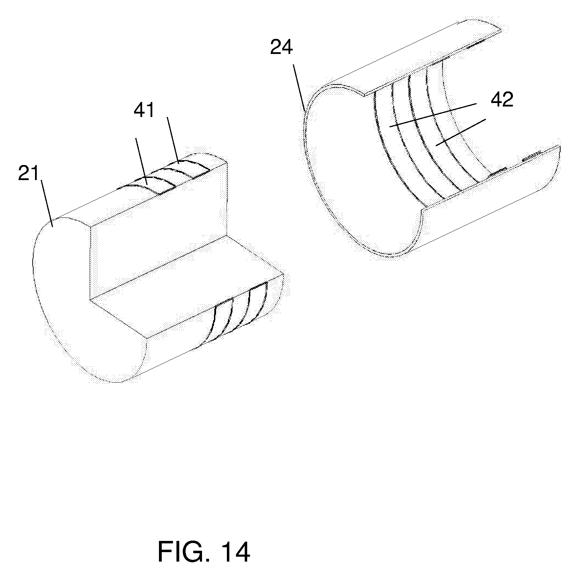

Figure 14 shows a catalyst cell 21 with two soldering portions 41 applied on its outer surface. Figure **14** also shows a jacket 24 with two soldering portions 41 applied on its inner surface. These can serve as alternative methods for attaching the catalyst cell 21 and the jacket 24 together or they can be used side by side with each other.

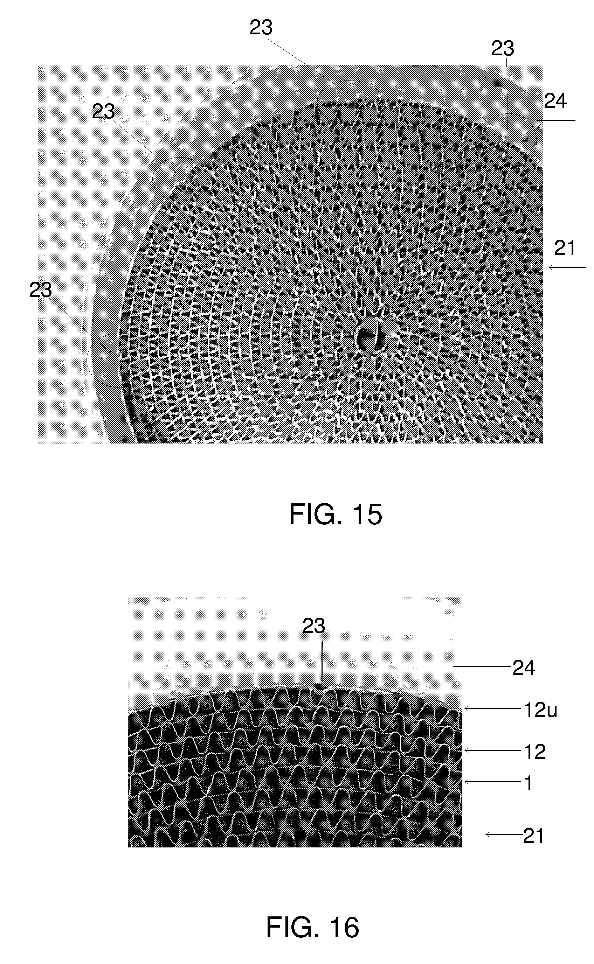

Figure 15 shows a photograph of a calibrated catalyst cell 21 installed in a jacket 24, having flexible elements 23 on its outer surface for improving the resistance of the catalyst cell.

Figure 16 is a detailed photograph of the catalyst cell 21 formed by rolling from the smooth metal foil and corrugated metal foil 1 according to Figure 15. On the outer surface of the catalyst cell 21 there are metal foil layers 12u, formed by rolling uniformly from the smooth metal foil 12, which are buckled for forming flexible elements 23. Such a flexible element improves the resistance of the catalyst cell 21 during thermal expansion and thermal reduction.

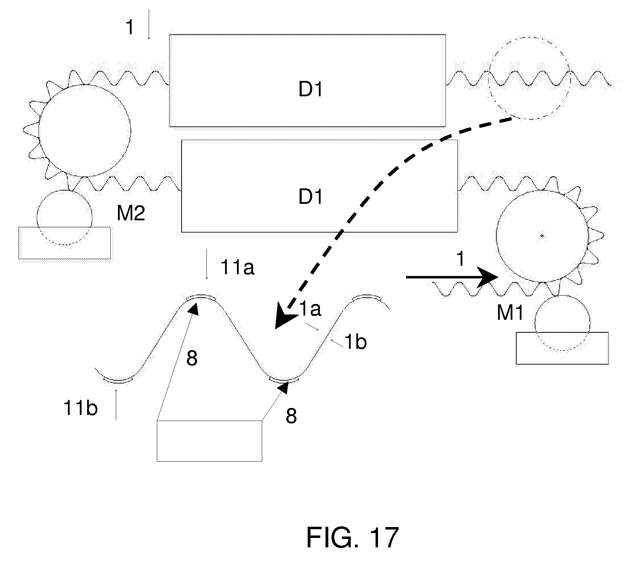

Figure 17 shows a corrugated metal foil 1, which is first led to first dispensing equipment M1 for dispensing the soldering paste 8 to the surface 1b of the corrugated metal foil 1 at the ribs of the corrugations 11 b. After this the corrugated metal foil 1 has been led to first drying equipment D1 for essentially drying the soldering paste 8. Then the corrugated metal foil 1 has been led to second dispensing equipment M2 for dispensing the soldering paste 8 to the other surface 1a of the corrugated metal foil 8, at the ribs of the corrugations 11a. After this the corrugated metal foil 1 has been led to second drying equipment for essentially drying the soldering paste 8 and for removing organic compounds.

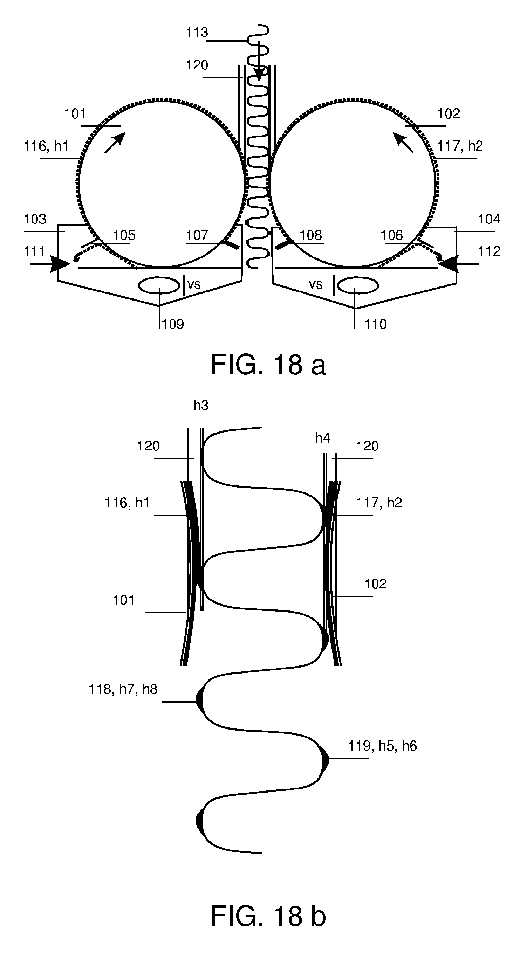

Figures 18a and 18b show how a corrugated foil 13 is conveyed to between the coating rolls 101 and 102 by means of a feed apparatus. The position of the corrugated foil between the coating rolls can be determined / adjusted using the control unit 120 such that soldering paste 116 and 117 is conveyed from the coating rolls 101 and 102 to the corrugation ribs 115 and 116 of the corrugated foil 113. The coating rolls 101 and 102 rotate to the same direction as the corrugated foil 113 travels. In the coating unit, to the surface of the coating rolls 101 and 102, an excessive amount of paste 116 and 117 attaches from the paste dispensing unit 103 and 104 to the surface of rolls 101 and 102. The point examined, in which paste 116 and 117 is excessively dispensed to the surface of roll 101 and 102, is conveyed out from the dispensing unit and passes through/over the paste separating unit 105 and 106, whereat excessive paste is removed from the surface of the coating roll 101 and 102. The separating unit adjusts the paste layer thickness h₁ and h₂, which is the first control parameter of the paste amount dispensed 118 and 119. The point examined proceeds, as the coating roll 101 and 102 rotates, towards the area, in which the corrugated foil 113 is closest to the rolls 101 and 102. As the point examined arrives to the area between the coating rolls 101 and 102, in which the distance h₃ and h₄ between the rolls and corrugated foils is minimum, paste is conveyed from the surface of the rolls 101 and 102 to the corrugation ribs of the corrugated foil. The amount of paste 118 and 119 to be dispensed at the corrugation ribs 114 and 115 of the corrugated foil 113 is adjusted by changing the distance between the corrugation ribs 114 and 115 of the corrugated foil 113 and the coating roll 101 and 102 by means of the clearance h₃ and h₄. In the coating event only a part of paste 116 and 117 dispensed to the surface of the rolls 101 and 102 is conveyed to the ribs of the corrugations 114 and 115 of the corrugated foil 113. After the coating event, with the rolls 101 and 102 rotating, the point examined is conveyed back towards the dispensing units 103 and 104. Before the point examined arrives at the dispensing unit 103 or 104, excessive paste 116 and 117 remaining on the surface of the roll 101 and 102 is removed, prior to redispensing soldering paste 116 and 117 to the surface of the rolls 101 and 102.

Dispensing the paste 116 and 117 to the surface of the coating rolls 101 and 102 is carried out in such a manner that the soldering paste 116 and 117 moves (vₛ) in the dispensing unit 103 and 104 to either the opposite or the same direction relative to the rotating direction of the rolls 101 and 102 between either two mobile walls 101-109, 102-110 or one mobile wall 101, 102. In the dispensing unit, the mobile/fixed walls, essential for the dispensing of paste, are composed of a dispensing roll 101 and 102 and a separate, either fixed or mobile wall 109, 110 disposed in the dispensing unit.

When using one mobile wall, which is now roll 101 or 102, the movement of paste to either the same direction or the opposite direction relative to the roll 101 or 102, is carried out using a separate recirculation apparatus. The movement of paste in the dispensing unit 103 and 104 between the roll 101 and 102 and the fixed wall, either 109 or 110, ensures that fresh paste is always dispensed to the surface of the dispensing roll 101 and 102. This fresh paste ensures uniform paste dispensing for the coating rolls 101 and 102 as well as uniform dispensing 118 and 119 to the corrugation ribs 114 and 115 of the corrugated foil 113.

The lower part of the coating roll 101 and 102 is in a tray 103 and 104 or in a space 103 and 104, in which soldering paste is stored. Consequently, as the coating roll rotates in the tray 103 and 104, soldering paste attaches to it in a non-predetermined amount, yet always manycorrugationly compared to the amount h₁ and h₂ that is needed for the coating of the ribs 114 and 115 of the corrugated metal foil 113. Therefore, extra soldering paste must be removed from the coating roll 101 and 102 before the paste 116 and 117 or the roll 101 and 102 contacts the ribs 114 and 115 of the corrugated metal foil 113. A layer of a desired thickness h₁ and h₂ of soldering paste 116 and 117 is achieved on the surface of the coating roll 1 by using a doctor or another removing device 105 and 106 of excessive soldering material, with which extra coating is removed from the roll surface before it contacts the ribs 114 and 115 of the corrugated metal foil 113. Soldering paste 116 and 117 with a predetermined amount disposed on the roll surface is conveyed, due to the effect of contact and adhesive forces, to the corrugation ribs 114 and 115 of the corrugated metal foil 113 to positions, which come in contact with the paste 116 and 117, disposed on the surface of the coating roll 101 and 102, and/or with the roll 101 and 102. In addition, as the corrugation rib 114 and 115 detaches from the contact with the paste 116 and 117 disposed on the surface of the coating roll 101 and 102, the viscosity of the soldering paste generates friction and shearing forces in the soldering paste, due to which a slightly larger amount of soldering paste is conveyed to the corrugation rib compared to the contact area h₅ and h₇. Due to the effect of these friction and shearing forces, a uniform soldering paste stripe 118 and 119 can be made at the corrugation rib 114 and 115 in such positions of the corrugated metal foil 113 as was predetermined.

As the corrugated foil 113 exits from the coating unit, it is conveyed to an evaporating/drying element, in which extra moisture and organic material is removed from the paste 118 and 119 dispensed on the surface of the corrugations 114 and 115. In this evaporation, however, all moisture and organic material is not removed, but only to such an extent that the foil 113 and the paste 118 and 119 dispensed at the corrugation ribs 114 and 115 thereof endures industrial processing. As moisture and organic material is still present in the dispensed paste, the paste 118 and 119 present on the surface of the corrugation ribs 114 and 115 of the corrugated foil 113 can be further modified before the soldering process.

## Claims

1. A corrugated metal foil for treating gases, **characterized in that** disposed on both sides (1a, 1b) of the corrugated metal foil (1, 113), at the ribs (11, 11a, 11b, 114, 115) of at least some of the corrugations (10), there is soldering paste (8, 118, 119) dispensed in liquid form and containing soldering material and adhesive paste, which has been dried after dispensing for reducing essentially moisture and organic materials of the soldering paste.

2. A corrugated metal foil according to claim 1, **characterized in that** soldering paste (8, 118, 119) is dried by heating at a temperature of 110-250°C.

3. A corrugated metal foil according to claim 1 or 2, **characterized in that** soldering paste (8, 118, 119) is dispensed simultaneously to the different sides (1 a, 1 b) of the corrugated metal foil (1, 113).

4. A metal foil according to any of the preceding claims, **characterized in that** the amount of soldering paste (8, 118, 119) is essentially equal on the different sides (1a, 1 b) of the corrugated metal foil (1, 113).

5. A corrugated metal foil according to any of the preceding claims, **characterized in that** soldering paste (8, 118, 119) is disposed on the different sides (1a, 1 b) of the corrugated metal foil (1, 113) in different positions relative to each other.

6. A corrugated metal foil according to any of the preceding claims, **characterized in that** soldering paste (8, 118, 119) is disposed on the different sides (1a, 1 b) of the corrugated metal foil (1, 113) in differing portion sizes relative to each other.

7. A corrugated metal foil according to any of the preceding claims, **characterized in that** soldering paste (8, 118, 119) is disposed at the ribs (11, 11a, 11b, 114, 115) of the corrugations (10) in portions having a thickness of 0.01-0.2 mm.

8. A corrugated metal foil according to any of the preceding claims, **characterized in that** soldering paste (8, 118, 119) is disposed at the ribs (11, 11a, 11 b, 114, 115) of the corrugations (10) in portions having a width and/or length of 3-30 mm.

9. A corrugated metal foil according to any of the preceding claims, **characterized in that** at one end of the corrugated metal foil (1, 113) there is a zone, in which soldering paste (8, 118, 119) is disposed essentially in an equal position on the different sides (1 a, 1 b) of the corrugated metal foil (1, 113).

10. A corrugated metal foil according to any of the preceding claims, **characterized in that** at one end of the corrugated metal foil (1, 113) there is a 1-20 mm wide zone, with no soldering paste dispensed at the ribs (11, 11 a, 11 b, 114, 115) of the corrugations thereof.

11. A metallic catalyst cell for treating gases, which comprises a corrugated metal foil (1, 113), **characterized in that** the corrugated metal foil (1, 113) is according to claims 1-10 and that attached to the corrugated metal foil (1, 113) there is a smooth metal foil (12) such that the soldering paste (8, 118, 119) at the ribs (11, 11a, 11b, 114, 115) of the corrugated metal foil (1, 113) is in contact with the smooth metal foil (12).

12. A catalyst cell according to claim 11, **characterized in that** the corrugated metal foil (1, 113) and the smooth metal foil (12) are attached together by rolling, doubling over, wrapping or piling.

13. A catalyst cell according to claim 11, **characterized in that** the catalyst cell (21) is a rolled catalyst cell and that on the outer surface of the rolled catalyst cell (21) there is one or more metal foil layers (12u), which are formed by rolling uniformly from the smooth metal foil (12) of the catalyst cell (21), contacting at least partly the same smooth metal foil (12), having soldering paste (8) inside for attaching the metal foil layer (12u) to the smooth metal foil (12, 12u) and/or to the corrugated metal foil (1).

14. A catalyst cell according to claims 11-13, **characterized in that** the smooth metal foil (12, 12u) of the catalyst cell (21) comprises flexible elements (23).

15. A catalyst cell according to claims 11-14, **characterized in that** the outer part of the smooth metal foil (12, 12u) comprises flexible elements (23), which are formed by buckling the smooth metal foil (12, 12u) by pressing the catalyst cell using a calibration tool.

16. A catalyst cell according to claims 11-15, **characterized in that** the catalyst cell (21, 34, 37) is connected to a jacket (24, 32), the inner diameter of which is 0.1-5 mm larger than the outer diameter of the catalyst cell (21, 34, 37).

17. A catalyst cell according to claims 11-16, **characterized in that** flexible elements (23) are essentially longitudinal,

18. A catalyst cell according to claims 11-17, **characterized in that** the catalyst cell (21) is attached to the jacket (24) by means of soldering portions (41) dispensed on the outer surface of the catalyst cell (21).

19. A catalyst cell according to claims 10-18, **characterized in that** the catalyst cell (21) is attached to the jacket (24) by means of one or more connecting grooves (22) pressed on the outer surface of the jacket (24).

20. A catalyst cell according to claims 11-19, **characterized in that** the catalyst cell (21) is attached to the jacket (24) for the area of a connecting groove (22) pressed on the outer surface of the jacket (24), which area is coated with soldering material on its outer surface.

21. A catalyst cell according to claims 11-20, **characterized in that** the catalyst cell (21) is attached to the jacket (24) for the area of a wide joint surface (22) pressed on the outer surface of the jacket (24), and soldering material is dispensed to the connecting area, on the outer surface of the catalyst cell.

22. A catalyst cell according to claims 11-21, **characterized in that** the catalyst cell (21) is attached to the jacket (24) by means of two and/or more 2-20 mm long and/or wide soldering portions (41) applied on the outer surface of the catalyst cell (21).

23. A catalyst cell according to claims 11-22, **characterized in that** the corrugated metal foil (1, 113) and the smooth metal foil (12, 12u) are attached together partly by spot welding.

24. A catalyst cell according to claims 11-23, **characterized in that** the calibrated catalyst cell (21) installed in the jacket (24) and the jacket (24) are pressed together using calibrating tools for removing at least partially the clearance (27) between the catalyst cell (21) and the jacket (24) and for achieving a contact between the catalyst cell (21) and the jacket (24).

25. A catalyst cell according to claims 11-24, **characterized in that** the catalyst cell (21) has been heated for soldering the metal foils (1, 12, 12u, 113) together and/or to the jacket (24) using the soldering material of the soldering paste (8).

26. A method for manufacturing a corrugated metal foil for treating gases, **characterized in that** liquid soldering paste (8) containing soldering material and adhesive paste is dispensed at the ribs (11, 11a, 11b, 114, 115) of at least some corrugations (10) on both sides of the corrugated metal foil (1, 113), and after dispensing the soldering paste (8, 118, 119) is dried for reducing essentially moisture and organic materials of the soldering paste.

27. A method for manufacturing a corrugated metal foil according to claim 26, **characterized in that** soldering paste (8, 118, 119) is simultaneously dispensed to the different sides (1a, 1b) of the corrugated metal foil (1, 113).

28. A method for manufacturing a metal catalyst cell for treating gases, **characterized in that** a smooth metal foil (12) is attached to a corrugated metal foil (1, 113) according to claims 1-10 or manufactured according to claims 26-27 such that the soldering paste (8, 118, 119) at the ribs (11, 11a, 11b, 114, 115) of the corrugations of the corrugated metal foil (1) is in contact with the smooth metal foil (12).

29. A method according to claim 28 for manufacturing a catalyst cell, **characterized in that** the corrugated metal foil (1, 113) and the smooth metal foil (12) are attached together by rolling, and that on the surface of the thus formed rolled catalyst cell (21) there is formed one or more metal foil layers (12u) by rolling uniformly from the smooth metal foil (12) that is at least partly in contact with the same smooth metal foil (12), to the inside of which soldering paste (8) is dispensed for attaching the metal foil layer (12u) to the smooth metal foil (12, 12u) and/or to the corrugated metal foil (1, 113).

30. A method according to claims 28-29 for manufacturing a catalyst cell, **characterized in that** flexible elements (23) are formed on the outer part of the smooth metal foil (12, 12u) by buckling the smooth metal foil (12, 12u) by pressing the catalyst cell (21) using a calibration tool.

31. A method according to claims 28-30 for manufacturing a catalyst cell, **characterized in that** the catalyst cell (21) is attached to the jacket (24), the inner diameter of which is 0.1-5 mm larger than the outer diameter of the catalyst cell (21).

32. A method according to claims 28-31 for manufacturing a catalyst cell, **characterized in that** soldering paste (8) is dispensed to the outer surface of the catalyst cell (21).

33. A method according to claims 28-32 for manufacturing a catalyst cell, **characterized in that** the catalyst cell (21) is attached to the jacket (24) by means of one or more connecting grooves (23) pressed on the outer surface of the jacket (24).

34. A method according to claims 28-33 for manufacturing a catalyst cell, **characterized in that** the catalyst cell (21) is heated for soldering the metal foils (1, 12, 12u, 113) together and/or to the jacket (24) using the soldering material of a soldering paste (8).

35. An apparatus for manufacturing a corrugated metal foil (1) according to claims 1-10 for treating gases, **characterized in that** the apparatus comprises
- dispensing equipment (M1, M2) for dispensing liquid soldering paste (8), which contains soldering material and adhesive paste, to both sides (1a, 1 b) of the corrugated metal foil (1), at the ribs (11 a, 11 b) of at least some of the corrugations (10), and
- drying equipment (D1, D2) for drying the soldering paste (8) after dispensing.

36. An apparatus for manufacturing a corrugated metal foil (113) according to claims 1-10 for treating gases, **characterized in that** for dispensing the soldering paste (116, 117) in two or more stages the apparatus is provided with two or more soldering paste coating rolls (101, 102),
- two or more dispensing devices (103, 104) for dispensing liquid soldering paste (16, 17) to the soldering paste coating rolls (101, 102),
- two or more soldering paste separating units (105, 106) for adjusting the paste layer (h1, h2) of the soldering paste (16, 17) on the coating roll (101, 102),
- a control unit (120) of the corrugated foil (113) for determining the position of the corrugated foil (113) relative to the coating rolls (101, 102),
- two or more soldering paste removal units (107, 108) for removing the soldering paste (116, 117) from the coating rolls (101, 102).

37. An apparatus according to claim 36 for manufacturing a corrugated metal foil (113), **characterized in that** the position of the coating roll (101, 102) and/or the control unit (120) is adjustable for adjusting the distance (h3, h4) of the corrugated metal foil (113) from the coating roll.

38. An apparatus for manufacturing a metal catalyst cell comprising a corrugated metal foil (1, 113) and a smooth metal foil (12), **characterized in that** the apparatus comprises
- dispensing equipment (M1, M2, 103, 104) for dispensing liquid soldering paste (8, 118, 119), which contains soldering material and adhesive paste, to both sides (1a, 1 b) of the corrugated metal foil (1, 113), at the ribs (11, 11 a, 11 b, 114, 115) of at least some of the corrugations,
- drying equipment (D1, D2) for drying the soldering paste (8, 118, 119) after dispensing, and
- a means for attaching the smooth metal foil (12) and the corrugated metal foil (1) together such that the soldering paste (8, 118, 119) at the ribs (11, 11a, 11b, 114, 115) of the corrugations of the corrugated metal foil (1, 113) is in contact with the smooth metal foil (12).

39. A catalyst cell according to claims 11-25 or as manufactured according to claims 28-34 or a catalyst cell manufactured in an apparatus according to claim 38, **characterized in that** the catalyst cell (21) is used for treating combustion gases, such as exhaust gases or flue gases, such as for cleaning and/or mixing.
